# EUROPEAN PATENT APPLICATION

(11) **EP 1 684 137 A2**
(43) Date of publication of application: **26.07.2006**
(21) Application number: 06250166.3
(22) Date of filing: 13.01.2006
(51) Int. Cl.: G05B 19/042

(54) **Network based triggering in an instrument system**

(30) Priority: 21.01.2005 US 40404
(71) Applicant: Agilent Technologies, Inc., Palo Alto, CA 94306 (US)
(72) Inventor: Eidson, John C., Palo Alto, California 94303 (US); Coverstone, Randy, Newark, California 94560 (US)
(74) Representative: Exell, Jonathan Mark

(57) **Abstract**

Techniques for network based triggering in an instrument system that enable instruments to effectively signal events without hardwired trigger lines. An instrument system 100 according to the present teachings includes a first instrument and a second instrument coupled to a local area network. The first instrument is capable of performing an action in response to an event that is signaled by the second instrument. The second instrument signals the event to the first instrument by transferring a trigger message 60 via the local area network.

## Description

An instrument system may include an arrangement of instruments each adapted to perform one or more functions pertaining to a device or system or environment of interest. Examples of instruments in a instrument system include measurement instruments, actuator instruments, application controllers, computational devices, as well as instruments that perform a combination of these functions.

It is common in an instrument system for an action associated with one instrument to depend on an event associated with another instrument. For example, in a test and measurement system it is common for a stimulus that is to be applied by an actuator instrument to depend on a measurement obtained by a measurement instrument. As a consequence, an instrument system may include a mechanism for signaling events among the instruments so that the appropriate actions may be taken.

One type of mechanism for signaling events in an instrument system employs hardwired trigger lines that are routed among the instruments. For example, an instrument that detects an event may signal the event to the another instruments by generating a trigger signal on its trigger out line. The other instrument may receive the trigger signal via its trigger in line and in response perform an appropriate action.

Unfortunately, a mechanism for signaling events that employs hardwired trigger lines may have a variety of disadvantages in an instrument system that includes a local area network (LAN) for general communication among instruments. For example, the extra wires needed for the trigger lines may increase the cost of an instrument system. In addition, the extra wires increase the likelihood of errors caused by misconnected or missing trigger cables. Moreover, the hardwired trigger lines may not be controllable by system software in a manner that permits easy system reconfiguration. Finally, the hardwired trigger lines may provide only a limited amount of event information, e.g. a single bit of information.

### SUMMARY OF THE INVENTION

Techniques are disclosed for network based triggering in an instrument system that enable instruments to effectively signal events without hardwired trigger lines. An instrument system according to the present teachings includes a first instrument and a second instrument coupled to a local area network. The first instrument is capable of performing an action in response to an event that is signaled by the second instrument. The second instrument signals the event to the first instrument by transferring a trigger message via the local area network. Techniques are also disclosed for handling latency in the transfer of trigger messages including internal architectures of the first and second instruments and system arming.

Other features and advantages of the present invention will be apparent from the detailed description that follows.

### BRIEF DESCRIPTION OF THE DRAWINGS

The present invention is described with respect to particular exemplary embodiments thereof and reference is accordingly made to the drawings in which:
**Figure 1** illustrates an instrument system that includes network based triggering according to the present teachings;
**Figure 2** illustrates a set of qualifying information in a trigger message in one embodiment;
**Figure 3** illustrates elements in an instrument that are employed in network-based triggering according to the present techniques;
**Figure 4** shows elements of a network switch that may cause latency and jitter in the transfer of trigger messages;
**Figure 5** shows an instrument system that includes an armed state and an unarmed state that are provided to minimize the latency of network based triggering according to the present techniques.

### DETAILED DESCRIPTION

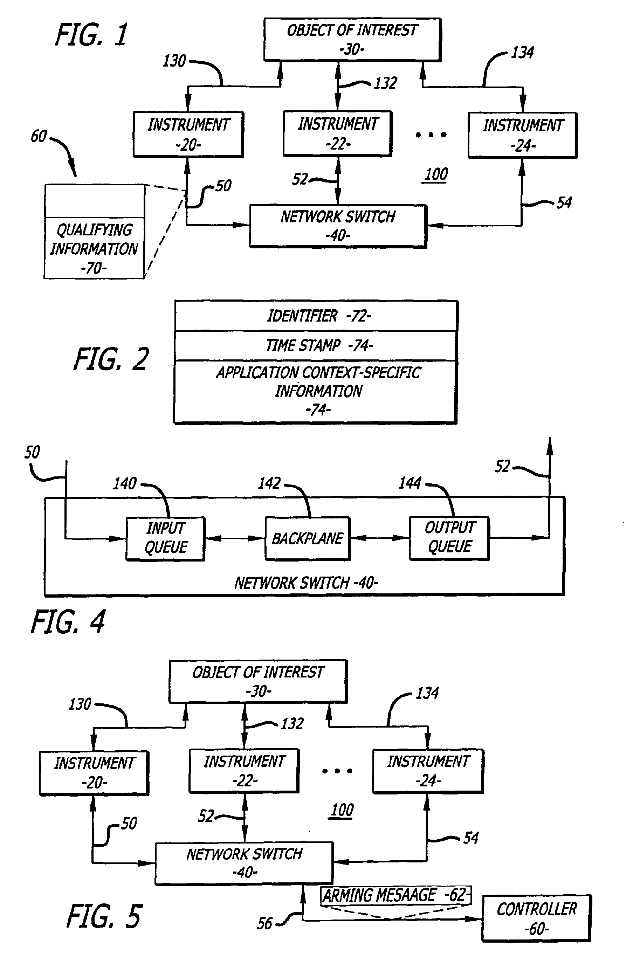

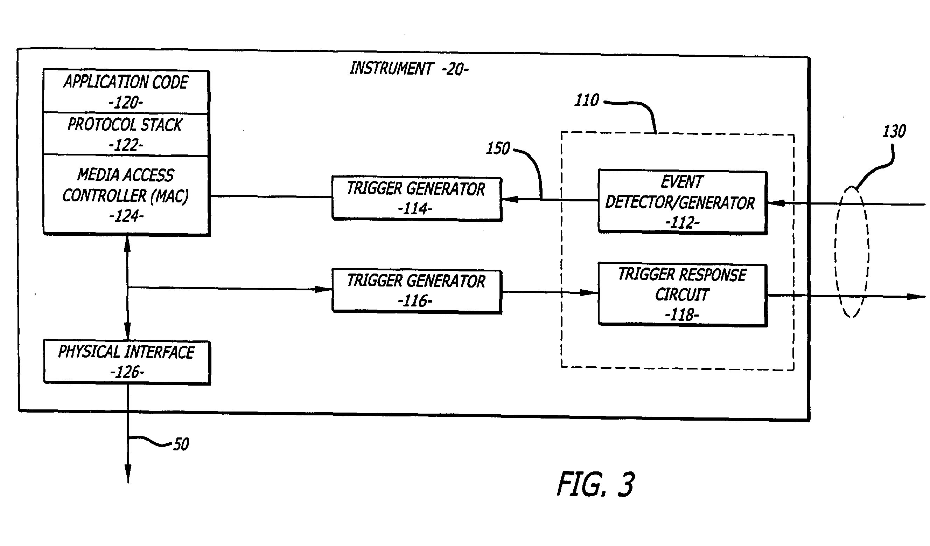

Figure 1 illustrates an instrument system 100 that includes network based triggering according to the present teachings. The instrument system 100 includes a set of instruments 20-24 that perform functions pertaining to an object of interest 30. The instruments 20-24 communicate via a LAN that includes a set of network communication lines 50-54 and a network switch 40. In one embodiment, the network communication lines 50-54 and the network switch 40 conform to an Ethernet standard.

The instruments 20-24 measure variables and/or apply stimuli to the object of interest 30 via corresponding sets of input/output channels 130-134. The object of interest 30 may be any device, system or environment of interest. For example, the object of interest 30 may be a device under test in a test and measurement system.

The instruments 20-24 signal events in the instrument system 100 by generating trigger messages and transmitting the trigger messages via the LAN. For example, the instrument 20 signals an event by generating a trigger message 60 and transmitting the trigger message 60 via the network communication line 50 and the network switch 40 to the instruments 22 and 24.

The trigger message 60 includes a set of qualifying information 70. The qualifying information 70 enables the recipients of the trigger message 60, e.g. the instruments 22 and 24, to determine an appropriate response to the trigger message 60. Example responses to the trigger message 60 by a recipient include performing an action or ignoring the trigger message 60.

In one embodiment, the trigger message 60 is carried in a packet that includes a destination address that is reserved for specifying a trigger message. All of the devices in the instrument system 100 including the instruments 20-24 and the network switch 40 are capable of recognizing the reserved destination address of a trigger message. Each individual device decides how to handle a trigger message, e.g. perform an action, ignore it, flush an output queue, inhibit other traffic, etc.

The architecture of the instrument system 100 may be viewed as providing a boundary between soft and hard real-time that occurs partially in the LAN. The boundary occurs partially in the LAN because the timing of the trigger message 60 is pertinent to the meeting of the hard real-time specifications. One or more of the instruments 22-24, e.g. the instrument 20, may include two real, or virtual, LAN inputs - one for hard and one for soft real-time considerations. In addition, the network switch 40 may be configured to provide virtual LANs which may be used to enable a high priority to trigger messages.

**Figure 2** illustrates the qualifying information 70 in one embodiment. The qualifying information 70 includes an identifier 72 for the event that caused the trigger message 60 to be generated. The identifier 72 may be used, for example, by a recipient to determine an appropriate action to be performed in response to the trigger message 60 or to determine whether or not to ignore the trigger message 60. For example, the instrument 22 may ignore the trigger message 60 if the identifier 72 specifies an event that is not pertinent to the functions of the instrument 22.

The qualifying information 70 includes a time stamp 74 that specifies the time of the event the caused the trigger message 60. The time stamp 74 may be used by a recipient to determine whether to perform an action or to ignore the trigger message 60. For example, if the identifier 72 specifies an event that is pertinent to the functions of the instrument 72 but the time stamp 74 specifies a time that is not pertinent to the functions of the instrument 22 then the instrument 22 may ignore the trigger message 60, i.e. take no action. The instrument 22 may select an action that depends on the value of the time stamp 74 or may perform a computation that depends on the value of the time stamp 74.

The qualifying information 70 includes a set of application context-specific information 76. The application context-specific information 76 may include any information that may be of use by recipients in determining an action or non-action to be take in response to the trigger message 60.

The response of the instruments 22 and 24 to the trigger message 60 may be the execution of a preprogrammed response as soon as possible after receipt of the trigger message 60.

One example of an event that may cause the instrument 20 to generate the trigger message 60 is the detection of a signal on the input/output channel 130 of the instrument 20. In this example, the event represents an occurrence external to the instrument 20, e.g. an event associated a change of state in the object of interest 30.

Another example of an event that may cause the instrument 20 to generate the trigger message 60 is the crossing of a threshold on a variable that is measured or monitored by the instrument 20. This variable may be internal to the instrument 20, such as line voltage, or may be external to the instrument 20, such as a property of the object of interest 30.

Another example of an event that may cause the instrument 20 to generate the trigger message 60 is the meeting of a logical condition on several variables. This may occur, for example, in logic analyzers where several Boolean variables, e.g. variables pertaining to the object of interest 30, are monitored with the event defined as a Boolean expression of these variables.

Yet another example of an event that may cause the instrument 20 to generate the trigger message 60 is a command issued by a control program. In this case the event may be part of a supervisory test program and may indicate, for example, when an experiment is to start.

The latency between the detection of the event corresponding to the trigger message 60 and the response by a recipient of the trigger message 60 may be a limiting factor in the ability of instrument system 100 to meet desired specifications. This latency may be overcome in a variety of circumstances.

One circumstance in which latency may be overcome occurs if an action to be taken in response to the trigger message 60 is an actuation, e.g. instituting a change in the physical world, that is specified to occur at an interval after the event. An example of such an action is to change a voltage applied to the object of interest 30 100 microseconds after the event signaled via the trigger message 60. If the interval of 100 microseconds is longer than the latency in the transfer of the trigger message 60 to a recipient then causality restrictions are satisfied. A recipient of the trigger message 60, e.g. the instrument 22, may use the time stamp 74 to apply the voltage to the object of interest 30 100 microseconds after the time specified with the time stamp 74.

Another circumstance in which latency may be overcome occurs if the action to be taken in response to the trigger message 60 is a non-destructive measurement of a variable of interest. In such a circumstance, an instrument may be configured to continuously measure the variable of interest and store the measurements in a circular buffer. The rate of measurements may be selected in response to the capacity of the circular buffer so that measurements taken in the past by an amount of time equal to the latency in the transfer of the trigger message 60 will be stored in the circular buffer when the trigger message 60 is received. The circular buffer mechanism also enables latency to be overcome in circumstances requiring the collection of measurements for an interval before an event and after an event corresponding to the trigger message 60. A circular buffer may be implemented so that each buffer entry includes a sequence number or a time stamp that enables post collection correlation of the contents of the circular buffer with a corresponding sequence number or time stamp that is specified in the trigger message 60. The time stamps or sequence numbers must be consistent throughout the instrument system 100. The time stamp for the event may be included in the trigger message 60 or it may be conveyed via a separate message to be acted on later by either the recipient of the trigger message 60 or the recipient of the contents of the circular buffer.

**Figure 3** illustrates elements in the instrument 20 that are employed in network-based triggering according to the present techniques. The instruments 22-24 may include similar elements. The instrument 20 includes mechanisms for network communication that include a set of application code 120, a protocol stack 122, a media access controller 124, and a physical interface 126 to the network communication line 50.

The instrument 20 includes a front-end circuit 110 for handling events associated with the instrument 20 including events detected by the instrument 20 and responses to events signaled by other instruments via trigger messages on the LAN. The front-end circuit 110 includes an event detector/generator 112. The event detector/generator 112 generates an event signal 150 in response to a measured signal on the input/output channel 130, e.g. a measured signal pertaining to the object of interest 30. The event signal 150 activates a trigger generator 114. The trigger generator 114 in response generates the trigger message 60 for transfer via the network communication line 50.

The trigger generator 114 provides the trigger message 60 directly to the media access controller 124 for transfer via the network communication link 50, thereby avoiding the latency and jitter that would occur if the trigger message 60 were generated by the application code 120 and sent down through the protocol stack 122. In one embodiment, the trigger generator 114 includes a memory that stores a packet containing the trigger message 60 that is preassembled and waiting to go the media access controller 124 in response to the event signal 150. The application code 120 may preassemble the packet and the trigger generator 114 may insert pertinent information into the packet, e.g. event identifier, time stamp, application context-specific information etc. In one embodiment, the trigger generator 114 causes the media access controller 124 to inhibit transmission of other pending outgoing packets until after the trigger message 60 has been sent.

The instrument 20 includes a trigger detector 116 that detects an incoming trigger message received via the network communication line 50 through the physical interface 126. The trigger detector 116 detects an incoming trigger message by examining the preamble and destination address portions of each incoming packet. The trigger detector 116 when it recognizes an incoming trigger message may also examine the qualifying information in the incoming trigger message to determine whether or not to ignore the incoming trigger message. The trigger detector 116 provides the incoming trigger message to a trigger response circuit 118 in the front end circuit 110. The trigger response circuit 118 performs a response to the incoming trigger message.

In one embodiment, the trigger detector 116 and the trigger response circuit 118 include an armed state and an unarmed state. In the armed state the next incoming trigger message will activate the trigger detector 116 and the trigger response circuit 118. In the unarmed state the receipt of an incoming trigger message will have no effect.

**Figure 4** shows elements of the network switch 40 that may cause latency and jitter in the transfer of trigger messages. The network switch 40 in the embodiment shown includes an input queue 140, a backplane 142, and an output queue 144. The input queue 140 holds incoming messages until the back plane 142 is free. The latency in the back plane 142 may be small compared with the latency for the output queue 144. For example, the output queue 144 may impose a high latency if it holds multiple packets having the same destination. In one embodiment, the network switch 40 is preconfigured to route trigger messages to the designated destinations, e.g. based on MAC address, to avoid IP processing and its associated delay.

**Figure 5** shows an embodiment of the instrument system 100 that includes an armed state and an unarmed state that are provided minimize the latency of network based triggering according to the present techniques. An arming message 62 is used to place the instrument system 100 in the armed state. In the embodiment shown, a controller 60, e.g. an application controller, places the instrument system in the armed state by generating an arming message 60 and transferring it to the network switch 40 and the instruments 20-24 via a network communication link 56. In other embodiments, one or more of the instruments 20-24 may generate the arming message 62. The instrument system 100 may automatically return to the unarmed state after a trigger message is generated or after a time out interval.

In the armed state, the trigger generation circuits in the instruments 20-24 are available for instant activation by an internal or external event. For example, the event detector/generator 112 and the trigger generator 114 in the instrument 20 are available in the armed state for instant activation by an external or internal event in the instrument 20. In addition, the outbound network traffic from the instruments 20-22 is inhibited in the armed state to prevent delays in the transfer of a trigger message. In the instrument 20, for example, the outbound network traffic from the protocol stack 122 is inhibited in the armed state to prevent contention for the media access controller 124 when it is needed to send a trigger message generated by the trigger generator 114. Messages already in progress may be preempted when an arming message is received.

In addition, the arming message 62 may cause the network switch 40 to preempt or flush the output queue 144. This enables a minimum delay in the handling of a trigger message in the network switch 40. Other network traffic into the network switch 40 may be queued at its input or preempted at its output if targeted for the destination device of a trigger message while in the armed state.

Other devices, e.g. repeaters, that may share the network communication links 50-56 inhibit transmission during the armed state.

The only type of packet that the instruments 20-24 receive while in the armed state is a trigger message. If an application only requires a single type of trigger message with no qualifying information then an instrument may trigger off of the first preamble bit of the trigger message, thereby saving decoding time. If an application allows multiple types of trigger messages then contention may be managed by individual instruments. In addition, the network switch 40 may be configured to prioritize multiple types of trigger messages in the event of contention.

The foregoing detailed description of the present invention is provided for the purposes of illustration and is not intended to be exhaustive or to limit the invention to the precise embodiment disclosed. Accordingly, the scope of the present invention is defined by the appended claims.

## Claims

1. An instrument system, comprising:
first instrument coupled to a local area network, the first instrument capable of performing an action in response to an event;
second instrument coupled to the local area network, the second instrument signaling the event to the first instrument by transferring a trigger message (60) via the local area network.

2. The instrument system of claim 1, wherein the trigger message (60) includes a set of qualifying information (70) that enables the second instrument to determine whether or not to perform the action.

3. The instrument system of claim 1, wherein the trigger message (60) includes a set of qualifying information (70) that enables the second instrument to determine whether or not to ignore the trigger message (60).

4. The instrument system of claim 1, wherein the action includes an actuation that is specified to occur at an interval after the event.

5. The instrument system of claim 1, wherein the action includes a measurement of a variable such that the measurement is held in a circular buffer in the second instrument when the second instrument receives the trigger message (60).

6. The instrument system of claim 1, wherein the trigger message (60) includes a destination address that is reserved for signaling the event throughout the instrument system.

7. The instrument system of claim 1, wherein the first instrument includes a trigger generator circuit (114) for generating the trigger message (60) in response to the event such that the trigger generator (114) provides the trigger message (60) to a media access controller (124) in the first instrument for transfer via the local area network.

8. The instrument system of claim 1, wherein the first instrument includes a trigger generator circuit (114) that accesses a preassembled trigger message (60) in response to the event and that provides the preassembled trigger message (60) to a media access controller (124) in the first instrument for transfer via the local area network.

9. The instrument system of claim 1, wherein the second instrument includes a trigger detector (116) that obtains the trigger message (60) from a physical interface to the local area network.

10. The instrument system of claim 1, further comprising a device that places the instrument system in an armed state by generating an arming message (62) such that the first instrument preempts outbound traffic to the local area network other than the trigger message (60) when in the armed state.
